# FASCICULE DE BREVET EUROPEEN

(11) **EP 1 392 528 B1**
(45) Date de publication et mention de la délivrance du brevet: **27.07.2005**
(21) Numéro de dépôt: 02740537.2
(22) Date de dépôt: 29.04.2002
(51) Int. Cl.: B60C 9/20

(54) **NAPPE DE RENFORCEMENT POUR PNEUMATIQUE**
VERSTÄRKUNGSSCHICHT FÜR EINEN REIFEN
REINFORCING LAYER FOR A TYRE

(30) Priorité: 03.05.2001 FR 0105951
(43) Date de publication de la demande: 03.03.2004
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: RUFFENACH, Jean-Marc, F-63118 Cebazat (FR); JALLAIS, Pierre, F-63400 Chamalières (FR)
(74) Mandataire: Le Cam, Stéphane
(86) Numéro de dépôt international: PCT/EP2002/004706
(87) Numéro de publication internationale: WO 2002/090134

(56) Documents cités:
- US-A- 2 151 186
- US-A- 4 506 717
- US-A- 5 342 678
- US-A- 5 571 352

## Description

L'invention concerne un pneumatique à armature de carcasse radiale destinée à équiper des engins de chantier et/ou de Génie Civil tels que chargeuses, camions, niveleuse, scrapers.

Le pneumatique ci-dessus comprend au moins et principalement une armature de carcasse de câbles métalliques radiaux, et entre ladite armature de carcasse et la bande de roulement, une armature de sommet, qui comprend principalement une armature dite de travail composée d'au moins deux nappes de câbles métalliques inextensibles, parallèles entre eux dans chaque nappe, et croisés d'une nappe à la suivante en faisant avec la direction circonférentielle des angles pouvant être compris entre 0° et 45°. L'utilisation d'engins équipés de tels pneumatiques exige en outre, radialement à l'extérieur des nappes de travail, la présence d'une armature supplémentaire dite de protection, composée d'au moins une nappe de câbles métalliques élastiques. On appelle câble élastique un câble qui, sous une force de tension égale à sa force de rupture, présente un allongement relatif au moins égal à 3%, alors qu'un câble dit inextensible, présente, sous une force de traction égale à 10% de sa force de rupture, un allongement relatif au plus égal à 0,2%. Les câbles de la(des) nappe(s) de protection font avec la direction circonférentielle des angles pouvant être compris entre 5 et 35°, et, dans le cas de l'existence de deux nappes, sont généralement croisés entre eux d'une nappe à la suivante.

Pour obtenir une armature de sommet avec de bonnes caractéristiques de flexibilité d'où il résulterait une plus grande résistance aux chocs subis par le pneumatique et un plus grand confort, le brevet FR 1 550 749 enseigne que les nappes de câbles métalliques formant ladite armature doivent obéir à certaines règles :
* la distance axiale a entre deux câbles de diamètre d d'une même couche doit être comprise entre 1,75 et 2,4 d,
* la distance radiale b entre deux câbles des deux couches respectives doit être telle que le rapport a/b soit compris entre 0,82 et 1,20.

Afin d'éviter les mouvements de friction aux croisements des fils ou câbles de trame avec les files ou câbles de chaîne dans un tissu tramé, le brevet US 2 151 186 enseigne d'utiliser en tant qu'éléments de trame du caoutchouc ou un composé caoutchouteux dans une condition plastique et extensible, les éléments de chaîne étant, comme connu en soi, les éléments destinés à renforcer le tissu, alors que les éléments de trame ont pour seul but le maintien du parallélisme entre éléments de chaîne.

Le brevet FR 2 614 582, dans le cas de l'architecture très particulière d'une armature pour pneumatique d'avion, propose d'utiliser en tant qu'armature de sommet un produit laminé ou feuilleté de renforcement comprenant un certain nombre de couches de renforcement empilées les unes sur les autres, chacune des dites couches contenant des éléments de renforcement parallèles entre eux et enrobés de caoutchouc, les éléments d'une première couche ayant des axes centraux décalés d'un demi-pas par rapport aux axes centraux des éléments de la deuxième couche adjacente à la première. Le dit agencement permettrait à une armature de sommet faite en éléments de renforcement en polyamide aromatique de conserver sa résistance aux chocs et d'avoir une meilleure durabilité.

Un pneumatique de l'espèce considérée est soumis de la part du sol sur lequel il évolue à de multiples agressions, en particulier pour les engins de chargement et de transport. De telles agressions par objets coupants, tranchants et autres, conduisent a) à des coupures de bande de roulement, de nappes de protection, mais aussi de nappes de travail avec possibilité de propagation et d'oxydation des éléments métalliques des dites nappes par l'humidité et les particules de sol, b) à des perforations de sommet dans son intégralité, l'armature de carcasse pouvant elle-même être perforée selon la nature et la forme de l'objet agresseur.

Afin de remédier aux inconvénients ci-dessus et d'améliorer autant que se peut la résistance des armatures de sommet de pneumatiques de l'espèce considérée, l'invention propose une nappe de renforcement pour pneumatique, formée d'éléments de renforcement enrobés dans des mélanges caoutchouteux d'enrobage, caractérisée en ce qu'elle comprend une première et une deuxième couches d'éléments métalliques parallèles entre eux, enrobés dans un(de) mélange(s) d'enrobage et, entre les deux dites couches, une troisième couche d'éléments en matériau textile enrobés dans un mélange d'enrobage, les dits éléments textiles étant orientés par rapport aux éléments métalliques avec un angle compris entre 70° et 110°.

Le matériau textile peut être du polyamide aliphatique, du polyester, mais est préférentiellement du polyamide aromatique.

Un élément textile peut être un câble de plusieurs filés retordus, mais aussi un monofilament.

Les éléments métalliques des première et deuxième couches sont préférentiellement des câbles en acier dits élastiques. Les câbles de la première couche peuvent être différents de ceux de la deuxième couche, l'utilisation d'une même qualité de câble métallique pour les dites deux couches est cependant avantageuse en ce qui concerne les coûts de fabrication.

Le(les) produit(s) d'enrobage préférentiellement utilisé(s) est(sont) un(des) mélanges caoutchouteux (il est cependant possible d'utiliser certains plastomères, en particulier pour enrober les éléments en matériau textile de la troisième couche de la nappe). Les éléments de renforcement métalliques et textiles des trois couches de la nappe conforme à l'invention peuvent être enrobés dans un mélange caoutchouteux unique, mais peuvent aussi être enrobés dans deux mélanges caoutchouteux différents par leurs compositions et/ou propriétés, un premier mélange enrobant les éléments métalliques et un deuxième mélange enrobant les éléments textiles. Les éléments métalliques des première et deuxième couches peuvent aussi être enrobés par deux mélanges caoutchouteux différents : un premier mélange couvrant respectivement les faces radialement supérieure et inférieure des deux premières couches et un deuxième mélange constituant les faces respectivement inférieure et supérieure des dites deux premières couches, ledit deuxième mélange étant préférentiellement le mélange assurant l'enrobage des éléments textile de la troisième couche.

Les caractéristiques de la présente invention seront mieux comprises à l'aide de la description de modes de réalisation décrits à titre non limitatif et illustrés par le dessin annexé sur lequel :
* la figure 1 représente schématiquement, vue en section une nappe selon une première variante conforme à l'invention,
* la figure 2 représente de la même manière une nappe selon une deuxième variante,
* la figure 3 est une vue en section méridienne d'un pneumatique pour chantiers comprenant des nappes de protection conformes à l'invention,
* la figure 4 représente très schématiquement et à titre d'exemple l'ensemble de machines ou outils utilisés pour la fabrication de telles nappes.

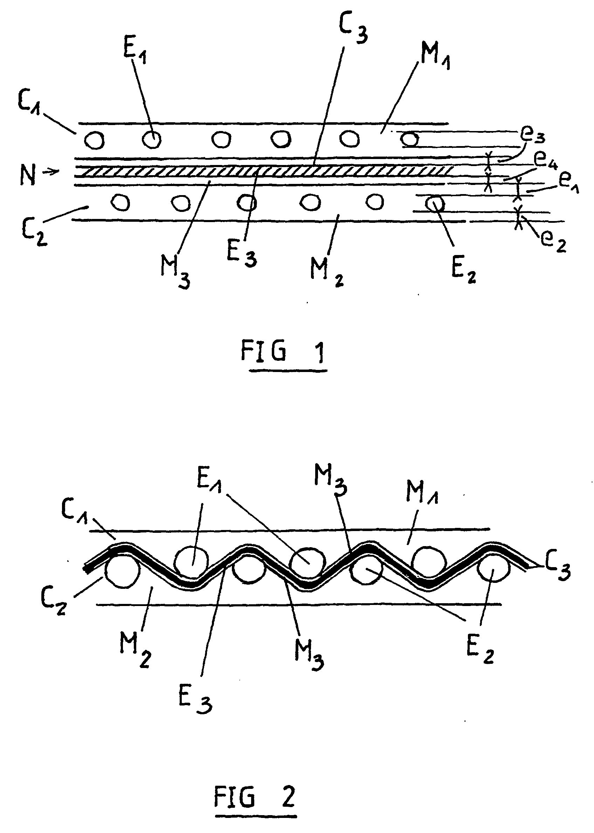

La figure 1 est une vue en section perpendiculaire à la direction des éléments de renforcement principaux E₁ et E₂ de la nappe N conforme à l'invention. Les dits éléments E₁ et E₂ sont des câbles métalliques en acier et élastiques : sont considérés comme élastiques des câbles qui, sous une force de traction égale à leur force de rupture, présentent un allongement relatif au moins égal à 3%. Les éléments E₁ sont enrobés dans un mélange caoutchouteux M₁ de calandrage, et sont avec ledit mélange, les constituants de la couche supérieure C₁ de la nappe N. Les éléments E₂ sont enrobés dans un mélange caoutchouteux M₂ et sont avec ledit mélange les constituants de la couche inférieure C₂ de la nappe N. Les éléments E₁ et E₂ sont parallèles entre eux dans chaque couche et séparés axialement les uns des autres d'un pas p constant. Les éléments E₁ et E₂ peuvent être différents pour les deux couches C₁ et C₂ : par exemple des câbles E₁ d'une structure donnée pour la couche C₁ et des câbles E₂ d'une autre structure pour la couche C₂, mais l'application industrielle est sérieuse lorsque les dits éléments sont identiques. Il en est de même des mélanges M₁ et M₂. Entre les deux couches C₁ et C₂ est disposée une troisième couche C₃ d'éléments de renforcement E₃ enrobés dans un mélange caoutchouteux M₃ de calandrage. Les dits éléments E₃ sont des monofilaments textiles en polyamide, dont la direction est perpendiculaire à la direction des éléments métalliques E₁, sont parallèles entre eux dans la couche C₃ et distants l'un de l'autre d'un pas P, qui peut être compris entre 1,2 et 4 fois le pas p. Si l'on appèle e₁ l'épaisseur de mélange caoutchouteux M₁ existante sur les génératrices radialement supérieures des éléments E₁ de la couche C₁, et e₂ l'épaisseur du même mélange M₁ existante sous les génératrices radialement inférieures des mêmes éléments, e₂ peut être ou non égal à e₁. Les coûts de fabrication sont amoindris si, préférentiellement les deux épaisseurs e₁ et e₂ sont égales. De même, si on appèle e₃ et e₄ les épaisseurs de mélange M₃ respectivement sur les génératrices supérieures et sous les génératrices inférieures des éléments E₃ de la couche intermédiaire C₃, il est préférable d'avoir e₃ = e₄. Par contre, e₃ et e₄ sont généralement différents de e₁ et e₂, étant donné que le mélange de calandrage M₃ est généralement différent du mélange M₁ par sa constitution, bien que parfaitement compatible avec le mélange M₁ du point de vue adhésion entre mélanges, que ce soit à l'état non vulcanisé ou à l'état vulcanisé.

La nappe N montrée sur la figure 2 diffère principalement de la nappe de la figure 1 par les points suivants :
- les couches de mélange de calandrage M₁, M₂ respectivement sous les génératrices inférieures des éléments E₁ de la couche supérieure C₁ et sur les génératrices supérieures des éléments E₂ de la couche inférieure C₂, n'existent pas de sorte que les dits éléments E₁ sont en contact direct avec la couche de mélange de calandrage M₃
- si les éléments métalliques E₁ sont de même nature et structure que les éléments de la figure 1, les éléments textiles E₃ sont par contre dans le cas décrit et montré sur la figure 2 des câbles textiles en polyamide aromatique, câbles qui sont par constitution plus flexibles que des monofilaments et qui permettent à diamètre sensiblement égal, et sous l'influence de la pression exercée par les deux rouleaux de la calandre de fabrication de la nappe, une interpénétration des éléments métalliques E₁ avec réduction de l'épaisseur de la nappe N et apparition d'une forme ondulée pour la couche intermédiaire C₃.

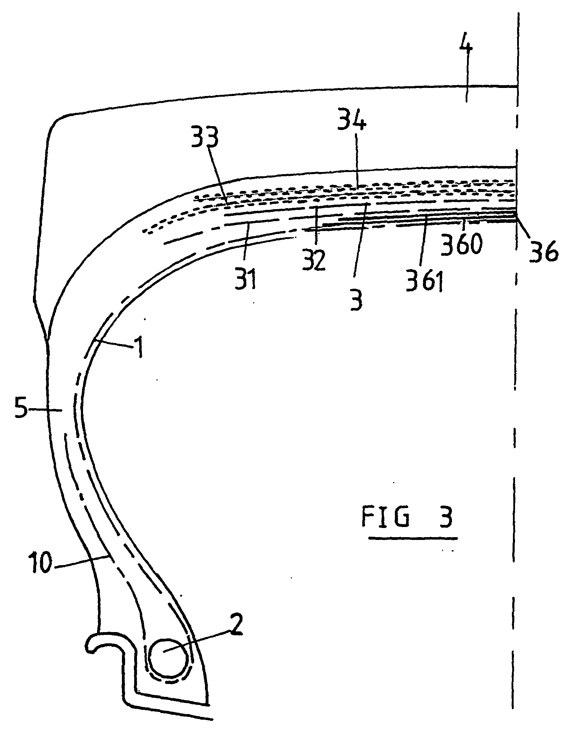

Sur la figure 3, une nappe N à trois couches C₁, C₂, C₃ constitue une nappe de protection 33 ou 34 d'un pneumatique de Génie Civil décrit ci-après. Ledit pneumatique, de dimension 18.00-33 XK, comprend une armature de carcasse composée d'une seule nappe 1 de câbles métalliques radiaux en acier et inextensibles, ladite nappe 1 étant ancrée dans chaque bourrelet, généralement par enroulement autour d'une tringle 2, pour former des retournements 10 d'armature de carcasse, retournements dont les extrémités sont situés sensiblement à mi-hauteur de flancs 5. Entre ladite armature de carcasse et la bande de roulement 4 est disposée une armature de sommet 3, qui comprend une première armature dite de travail et composée d'au moins deux nappes 31 et 32 de câbles métalliques inextensibles, parallèles entre eux dans chaque nappe, et croisés d'une nappe 31 à la suivante 32 en faisant avec la direction circonférentielle des angles égaux respectivement à 34° et 20°. Ladite armature de travail 3 est complétée, radialement à l'intérieur, par une armature de frettage 36 de carcasse 1 se présentant sous la forme d'un bloc limiteur 36 de deux nappes 360 et 361 de câbles métalliques inextensibles orientés par rapport à la direction circonférentielle d'un angle plus faible que le plus petit angle des câbles des nappes de travail et égal à 8°, les dites nappes de frettage 360 et 361 ayant des largeurs axiales faibles comparativement aux largeurs axiales des nappes de travail 31 et 32.

Radialement à l'extérieur de l'armature de travail 31, 32, est disposée l'armature de protection composée dans le cas décrit de deux nappes 33 et 34 de protection, chacune des dites nappes étant une nappe N constituée de trois couches C₁, C₂, C₃. Les couches C₁ et C₂ sont identiques et constituées de câbles métalliques élastiques enrobés dans un mélange M₁ à base de caoutchouc naturel. La couche C₃ est constituée de monofilaments en polyamide enrobés dans le même mélange M₁. Les largeurs axiales des dites deux nappes de protection 33 et 34 sont telles que la largeur axiale de la nappe de protection 33 radialement la plus à l'intérieur soit plus grande que la largeur axiale de la nappe de travail 31 radialement la plus à l'intérieur et que la largeur axiale de la nappe de protection 34 radialement la plus à l'extérieur soit plus grande que la largeur axiale de la nappe de travail 32 radialement la plus à l'extérieur.

L'utilisation de telles nappes de protection a permis un gain très significatif en résistance aux coupures tout en ne pénalisant pas la résistance aux chocs et perforations : pour un même nombre d'heures de roulage effectuées sur un sol rocailleux, le nombre de coupures observées sur la dernière nappe de protection 34 est sensiblement divisée par 1,5, le nombre de coupures observées sur la nappe de protection 33 la plus à l'intérieur est divisé par 4, et alors que le pneumatique témoin (avec nappes de protection usuelles) présente des coupures sur la nappe de travail 32, la nappe 32 du pneumatique d'essai n'a aucune trace. Il faut ajouter que l'on relève de nombreuses traces d'oxydation sur la nappe 32 de travail du pneumatique témoin alors que celle du pneumatique d'essai est intacte.

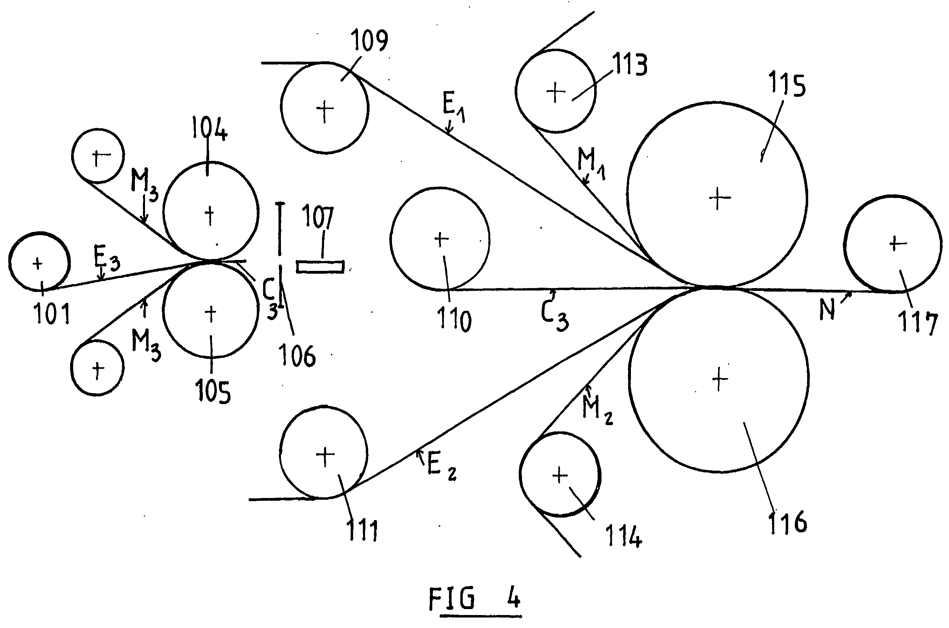

L'ensemble des machines nécessaires à la fabrication d'une nappe conforme à l'invention est simple et connu en soi. En référence à la figure 4, la troisième couche C₃ est préfabriquée en introduisant simultanément entre deux rouleaux 104 et 105 d'une calandre d'une part une rangée d'éléments textiles E₃ enroulés sur une bobine 101 et d'autre part deux couches ou feuilles de mélange de calandrage M₃. Il sort des rouleaux 104 et 105 la couche C₃ que l'on coupe ensuite sur une coupeuse 106 perpendiculairement, dans le cas décrit, à la direction de calandrage qui est la direction des éléments E₃. Les laizes obtenues sont ensuite aboutées sur une abouteuse 107 pour former une couche C₃ dont les éléments sont perpendiculaires à la direction de calandrage sur la calandre 104,105, couche C₃ qui est bobinée sur une bobine 110. Ladite bobine 110 alimente, en même temps que les éléments métalliques E₁, E₂ (bobinés sur les bobines 109 et 111) et que les couches de mélange de calandrage M₁, M₂ sortant des rouleaux 113 et 114, une calandre formée principalement des rouleaux 115 et 116, d'où sort la nappe N qui est alors enroulée sur le rouleau 117.

## Revendications

1. Nappe de renforcement N de pneumatique, formée d'éléments de renforcement enrobés dans des produits d'enrobage, **caractérisée en ce qu'**elle comprend une première C₁ et une deuxième C₂ couches d'éléments métalliques E₁, E₂, parallèles entre eux, enrobés dans un(des) produit(s) d'enrobage M₁, M₂, et, entre les deux dites couches C₁ et C₂, une troisième couche C₃ d'éléments E₃ en matériau textile enrobés dans un produit d'enrobage M₃, les dits éléments textiles E₃ étant orientés par rapport aux éléments E₁ et E₂ avec un angle compris entre 70° et 110°.

2. Nappe de renforcement selon la revendication 1, **caractérisée en ce que** le matériau textile est du polyamide aromatique.

3. Nappe selon la revendication 2, **caractérisée en ce que** les éléments textiles E₃ sont des monofilaments.

4. Nappe selon la revendication 1, **caractérisée en ce que** les éléments métalliques E₁ et E₂ sont des câbles en acier dits élastiques et identiques pour les première et deuxième couche C₁ et C₂.

5. Nappe selon la revendication 4, **caractérisée en ce que** les mélanges caoutchouteux M₁, M₂, M₃ sont de constitution identique.

6. Nappe selon la revendication 4, **caractérisée en ce que** les mélanges M₁ et M₂ sont de constitution identique, alors que le mélange M₃ est de constitution différente.

7. Pneumatique à armature de carcasse radiale (1) surmontée radialement d'une armature de sommet (3) comprenant au moins une nappe dite de protection (33, 34), **caractérisée en ce que** ladite nappe (33, 34) est une nappe N selon l'une des revendications 1 à 6.

## Patentansprüche

1. Lage N zur Verstärkung eines Luftreifens, die aus Verstärkungselementen gebildet ist, die in Produkten zur Ummantelung eingebettet sind, **dadurch gekennzeichnet, dass** sie eine erste Schicht C₁ und eine zweite Schicht C₂ aus Metallelementen E₁, E₂, die parallel zueinander verlaufen und in (ein) Produkt(e) zur Ummantelung M₁, M₂ eingebettet sind, und zwischen den beiden Schichten C₁ und C₂ eine dritte Schicht C₃ aus Elementen E₃ aus einem textilen Material aufweist, die in einem Produkt zur Ummantelung M₃ eingebettet sind, wobei die textilen Elemente E₃ in Bezug auf die Elemente E₁ und E₂ in einem Winkel von 70 bis 110° ausgerichtet sind.

2. Lage zur Verstärkung nach Anspruch 1, **dadurch gekennzeichnet, dass** das textile Material aus einem aromatischen Polyamid besteht.

3. Lage nach Anspruch 2, **dadurch gekennzeichnet, dass** die textilen Elemente E₃ Monofilamente sind.

4. Lage nach Anspruch 1, **dadurch gekennzeichnet, dass** die Metallelemente E₁ und E₂ so genannte elastische Stahlseile sind, die für die erste und zweite Schicht C₁ und C₂ identisch sind.

5. Lage nach Anspruch 4, **dadurch gekennzeichnet, dass** die Kautschukmischungen M₁, M₂, M₃ die gleiche Beschaffenheit aufweisen.

6. Lage nach Anspruch 4, **dadurch gekennzeichnet, dass** die Mischungen M₁ und M₂ identisch aufgebaut sind, wohingegen die Mischung M₃ eine unterschiedliche Beschaffenheit aufweist.

7. Luftreifen mit radialer Karkassenbewehrung (1), wobei sich in radialer Richtung über der Karkassenbewehrung eine Scheitelbewehrung (3) befindet, die mindestens eine so genannte Schutzlage (33, 34) umfasst, **dadurch gekennzeichnet, dass** diese Lage (33, 34) eine Lage N nach einem der Ansprüche 1 bis 6 ist.

## Claims

1. Reinforcement ply N for a tyre, formed of reinforcement elements embedded in coating products, **characterised in that** it comprises a first C₁ and a second C₂ layer of metallic elements E₁, E₂ parallel to one another, embedded in a coating product or coating products M₁, M₂ and, between the said two layers C₁ and C₂, a third layer C₃ of elements E₃ made from a textile material and embedded in a coating product M₃, the said textile elements E₃ being orientated relative to the elements E₁ and E₂ at an angle between 70° and 110°.

2. Reinforcement ply according to Claim 1 **characterised in that** the textile material is aromatic polyamide.

3. Ply according to Claim 1, **characterised in that** the textile elements E₃ are monofilaments.

4. Ply according to Claim 1, **characterised in that** the metallic elements E₁ and E₂ are steel cables said to be elastic and are identical in the first and second layers C₁ and C₂.

5. Ply according to Claim 4, **characterised in that** the rubber mixtures M₁, M₂, M₃ have identical constitution.

6. Ply according to Claim 4, **characterised in that** the mixtures M₁ and M₂ have identical constitution while the mixture M₃ has a different constitution.

7. Tyre with a radial carcass reinforcement (1) surmounted radially by a crown reinforcement (3) comprising at least one so-termed protection ply (33, 34), **characterised in that** the said ply (33, 34) is a ply N according to any of Claims 1 to 6.
